# EUROPÄISCHE PATENTSCHRIFT

(11) **EP 2 718 992 B1**
(45) Veröffentlichungstag und Bekanntmachung des Hinweises auf die Patenterteilung: **13.12.2017**
(21) Anmeldenummer: 12722723.9
(22) Anmeldetag: 18.05.2012
(51) Int. Cl.: H01M 12/06, H01M 2/02, B42D 15/02

(54) **GRUSSKARTE MIT METALL-LUFT-ZELLE**
GREETING CARD HAVING A METAL-AIR CELL
CARTE DE VOEUX À CELLULE MÉTAL-AIR

(30) Priorität: 09.06.2011 DE 102011077250
(43) Veröffentlichungstag der Anmeldung: 16.04.2014
(73) Patentinhaber: VARTA Microbattery GmbH, 73479 Ellwangen (DE)
(72) Erfinder: PYTLIK, Edward, 73479 Ellwangen (DE); KREBS, Martin, 73494 Rosenberg (DE)
(74) Vertreter: Patentanwaltskanzlei Cartagena
(86) Internationale Anmeldenummer: PCT/EP2012/059265
(87) Internationale Veröffentlichungsnummer: WO 2012/168052

(56) Entgegenhaltungen:
- WO-A1-00/38268
- WO-A1-01/70392
- JP-A- 2001 325 997
- JP-A- 2010 061 826
- US-A- 4 493 880
- US-A- 5 354 625
- US-A1- 2004 159 813
- US-A1- 2004 224 195
- US-B1- 6 329 095

## Beschreibung

Die vorliegende Erfindung betrifft elektronische Grußkarten.

Billigprodukte wie elektronischen Grußkarten (Grußkarten, die beim Öffnen einen Melodie abspielen oder einen Audiobotschaft wiedergeben) weisen häufig als Energiequelle Knopfzellen (in der Regel nicht wiederaufladbar) auf. Die Montage von Knopfzellen in Produkten wie elektronischen Grußkarten ist allerdings vergleichsweise aufwändig. Darüber hinaus tragen Knopfzellen auf.

Aus der WO 00/38268 A1 sind Metall-Luft-Zellen bekannt, die ein festes Gehäuse aufweisen. Die Luftzufuhr in das Gehäuse wird mittels einer verschließbaren Tür geregelt.

In der WO 01/70392 A1 sind Elektroden beschrieben, die sich insbesondere als Luftkathoden für Metall-Luft-Zellen eignen. Die Elektroden werden aus druckbaren Pasten gebildet.

Aus der US 6329095 B1 sind Metall-Luft-Zellen in Knopfzellenform bekannt, deren Gehäuse stirnseitig mehrere Lufteintrittslöcher aufweist. Vor der ersten Benutzung sind diese mittels eines abziehbaren Aufklebers verschlossen. Zur Inbetriebnahme wird der Aufkleber abgezogen und dann üblicherweise entsorgt.

Aus der JP 2010 061826 A sind Metall-Luft-Zellen bekannt, deren Betriebsstabilität durch geeignete Maßnahmen erhöht wurde. Zum Ausgleich von Spannungsschwankungen wurde die Luftzufuhr regelbar ausgebildet. Hierzu wurde das Gehäuse mit geeigneten Ventilen ausgestattet.

Weitere Regelsysteme für die Luftzufuhr von Metall-Luft-Zellen sind aus der US 2004/0159813 A1, der US 4493880 A, der US 2004/0224195 A1 und der US 5354625 A bekannt.

Aus der JP 2001 325997 A ist ein Gehäuse für Batterien bekannt, das einer Selbstentladung der Batterien in unbenutztem Zustand vorbeugen soll. Hierzu weist das Gehäuse einen Federmechanismus auf, mittels dem Lufteintrittslöcher wirksam verschlossen werden können.

Der vorliegenden Erfindung lag die Aufgabe zugrunde, Grußkarten mit einer hinsichtlich der angesprochenen Probleme verbesserten Energieversorgung bereitzustellen.

Diese Aufgabe wird gelöst durch Grußkarten mit den Merkmalen des Anspruchs 1. Eine bevorzugte Ausführungsform einer solchen Grußkarte ist im Anspruch 2 angegeben.

Grußkarten gemäß der vorliegenden Erfindung weisen als Energiequelle eine Metall-Luft-Zelle auf. Metall-Luft-Zellen enthalten als elektrochemische Aktivkomponenten üblicherweise eine metallbasierte Anode und eine Luftkathode, die durch einen Separator (umfassend einen ionenleitfähigen Elektrolyten) voneinander getrennt sind. Dies ist auch vorliegend der Fall. Bei der Entladung von Metall-Luft-Zellen wird an der Luftkathode Sauerstoff unter Elektronenaufnahme reduziert. Es entstehen Hydroxidionen, die über den Elektrolyten zur Anode wandern können. Dort wird ein Metall unter Elektronenabgabe oxidiert. Die entstehenden Metallionen reagieren mit den Hydroxidionen ab.

Es existieren sowohl primäre als auch sekundäre Metall-Luft-Zellen. Eine sekundäre Metall-Luft-Zelle wird geladen, indem zwischen Anode und Kathode eine Spannung angelegt und die beschriebene elektrochemische Reaktion umgekehrt wird. Dabei wird Sauerstoff freigesetzt.

Das bekannteste Beispiel einer Metall-Luft-Zelle ist die Zink-Luft-Zelle, bei der eine zinkhaltige oder aus Zink bestehende Anode als metallbasierte Anode zum Einsatz kommt. Auch vorliegend kommen bevorzugt Zink-Anoden zum Einsatz.

Metall-Luft-Zellen weisen eine relativ hohe Energiedichte auf, weil der Bedarf an Sauerstoff an der Kathode durch Luftsauerstoff aus der Umgebung gedeckt werden kann. Entsprechend muss der Kathode beim Entladevorgang Luftsauerstoff zugeführt werden. Umgekehrt muss beim Laden einer Metall-Luft-Zelle an der Luftkathode entstehender Sauerstoff abgeführt werden.

Als Luftkathode kommen in Metall-Luft-Zellen üblicherweise Gasdiffusionselektroden zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung und gegebenenfalls auch die Oxidation von Hydroxidionen bei der Ladung der Zellen.

Am häufigsten kommen in Metall-Luft-Zellen als Luftkathoden kunststoffgebundene Gasdiffusionselektroden zum Einsatz. Beispielsweise sind in der DE 37 22 019 A1, Elektroden beschrieben, bei denen ein Kunststoffbinder (meist Polytetrafluorethylen, kurz PTFE) eine poröse Matrix ausbildet, in die Partikel aus einem elektrokatalytisch aktiven Material (zum Beispiel aus einem Edelmetall wie Platin oder Palladium oder aus einem Manganoxid) eingelagert sind. Auch vorliegend kommen als Luftkathoden bevorzugt solche Gasdiffusionselektroden zum Einsatz.

Als Separatoren kommen für Metall-Luft-Zellen beispielsweise mikroporöse Folien, Vliese oder Netze, die gegebenenfalls mit einer ein Leitsalz enthaltenden Lösung getränkt sind, in Frage. Auch im Rahmen der vorliegenden Erfindung sind solche Separatoren für die Metall-Luft-Zelle der erfindungsgemäßen Grußkarte einsetzbar. Eine weitere Separatorvariante wird noch unten beschrieben.

Die Energiedichte von Metall-Luft-Zellen wie Zink-Luft-Zellen liegt in aller Regel mindestens um den Faktor 2 höher als die von vergleichbaren Lithium-Ionen-Batterien oder von Nickel-Metallhydrid-Batterien. Die erfindungsgemäße Grußkarte weist entsprechend eine hochkapazitive Energiequelle auf.

Die Bestandteile einer Metall-Luft-Zelle (die Luftkathode, die metallbasierte Anode und der Separator) sind in der Regel stets zum Schutz vor äußeren Einflüssen von einem Gehäuse umschlossen. Dies gilt auch vorliegend. Damit die Versorgung der Luftkathode mit Sauerstoff gewährleistet ist, weist das Gehäuse einer Metall-Luft-Zelle einer erfindungsgemäßen Grußkarte mindestens eine Eintrittsöffnung für Luftsauerstoff auf.

Besonders zeichnet sich die erfindungsgemäße Grußkarte dadurch aus, dass sie mindestens ein Mittel zum Öffnen und Verschließen der mindestens einen Eintrittsöffnung für Luftsauerstoff aufweist.

Klassisch wird bei elektronischen Vorrichtungen zum Ein- oder Ausschalten ein mechanischer oder elektronischer Schalter betätigt, der einen Stromkreis unterbricht, in den eine primäre oder sekundäre Batterie sowie eine entsprechende elektronische Anwendung integriert sind. Im Moment der Unterbrechung des Stromkreislaufes setzt der Betrieb der betroffenen Vorrichtung aus. Gemäß der vorliegenden Erfindung hingegen erfolgt das Ein- oder Ausschalten von mittels einer Metall-Luft-Zelle betriebenen Vorrichtungen zumindest nicht ausschließlich durch das Unterbrechen oder Schließen eines Stromkreises.

Stattdessen wird die Zufuhr von Luftsauerstoff zur Luftkathode der in der erfindungsgemäßen Grußkarte enthaltenen Metall-Luft-Zelle gekappt. Ein separater Schalter ist nicht zwingend erforderlich.

Das Mittel zum Öffnen und Verschließen der mindestens einen Eintrittsöffnung ist denkbar einfach ausgebildet, nämlich als Klappe, Ventil oder Schieber.

Die Luftkathode, die metallbasierte Anode und der Separator sind jeweils als dünne Schicht ausgebildet. In diesem Fall kann also von einer Kathoden-, einer Anoden- und einer Separatorschicht gesprochen werden. Gemeinsam bilden die Schichten einen Stapel aus, in dem die Separatorschicht zwischen der Anoden- und der Kathodenschicht angeordnet ist, um einen Kurzschluss zu vermeiden.

Die Metall-Luft-Zelle umfasst in aller Regel mindestens einen elektrischen Ableiter zur elektrischen Kontaktierung der Luftkathode sowie mindestens einen elektrischen Ableiter zur elektrischen Kontaktierung der metallbasierten Anode.

Der mindestens eine elektrische Ableiter zur Kontaktierung der Luftkathode ist bevorzugt netz- oder gitterartig ausgebildet. Innerhalb des erwähnten Stapels ist er bevorzugt auf einer oder auf beiden Seiten der Kathodenschicht angeordnet.

Der mindestens eine elektrische Ableiter zur Kontaktierung der metallbasierten Anode ist bevorzugt netz-, gitter- und/oder folienartig ausgebildet. Sofern er eine netz- oder gitterartige Ausgestaltung aufweist, ist er innerhalb des erwähnten Stapels bevorzugt auf einer oder auf beiden Seiten der Anodenschicht angeordnet. Sofern er eine folienartige Ausgestaltung aufweist, ist er bevorzugt auf der dem Separator abgewandten Seite der Anodenschicht angeordnet.

Der Stapel aus der Kathoden-, der Anoden- und der Separatorschicht weist bevorzugt eine der folgenden Schichtsequenzen auf:
(1) Ableiter - Luftkathode - Separator - Anode - Ableiter
(2) Ableiter - Luftkathode - Ableiter - Separator - Anode - Ableiter
(3) Luftkathode - Ableiter - Separator - Anode - Ableiter
(4) Ableiter - Luftkathode - Separator - Ableiter - Anode
(5) Ableiter - Luftkathode - Separator - Ableiter - Anode - Ableiter
(6) Ableiter - Luftkathode - Ableiter - Separator - Ableiter - Anode
(7) Ableiter - Luftkathode - Ableiter - Separator - Ableiter - Anode - Ableiter
(8) Luftkathode - Ableiter - Separator - Ableiter - Anode
(9) Luftkathode - Ableiter - Separator - Ableiter - Anode - Ableiter

Grundsätzlich ist es auch möglich, dass Ableiter zusätzlich oder an Stelle der dargestellten Ableiter in den Elektroden, also innerhalb der Kathoden und/oder Anodenschicht, angeordnet sind. Insbesondere sind innerhalb der Elektroden auch dreidimensionale Ableiterstrukturen, beispielsweise Vliese aus Metallfäden, einsetzbar.

Netz- oder gitterartige Ableiter setzen sich üblicherweise aus einzelnen, gekreuzt angeordneten Leiterbahnen zusammen, die auf verschiedenste Weise realisiert werden können. So ist es möglich, aus Streifen aus dünnen Metallfolien symmetrische und unsymmetrische Ableiterstrukturen zu bilden. Auch die Verwendung eines Netzes oder eines Gitters aus einem Metall, zum Beispiel aus Nickel, Silber oder versilbertem Nickel, ist möglich. Weiterhin kann es sich bei den Leiterbahnen auch um dünne Metallbahnen oder Metallschichten handeln, die mittels eines üblichen Metallisierungsverfahrens (zum Beispiel durch galvanische Abscheidung oder Abscheidung aus der Gasphase) auf ein Substrat aufgebracht wurden.

Unter dem oben erwähnten Begriff "dünne Schicht" soll verstanden werden, dass die Dicke der Kathoden-, Anoden- und der Separatorschicht in der Regel nicht mehr als 700 µm beträgt.

Der Stapel aus den Schichten, gegebenenfalls inklusive den elektrischen Ableitern auf und/oder zwischen den Schichten, weist eine maximale Dicke zwischen 200 µm und 1000 µm auf.

Batterien sind nicht nur durch Zusammenfügen fester Einzelkomponenten herstellbar. Vielmehr gewinnen in den letzten Jahren auch verstärkt Batterien an Bedeutung, zu deren Herstellung zumindest einzelne Funktionsteile, insbesondere die Elektroden und/oder erforderliche Leiterbahnen, durch Druck, also aus einer lösungs- und/oder suspensionsmittelhaltigen Paste, hergestellt werden.

Vorliegend ist mindestens eine der beschriebenen Komponenten aus der Gruppe mit Luftkathode, Anode, Separator und Ableiter für Anode und Kathode durch ein Druckverfahren gebildet.

Besonders bevorzugt wird der Stapel aus der Luftkathode, der metallbasierten Anode, dem Separator und gegebenenfalls den elektrischen Ableitern auf einem flächigen Substrat gebildet und nimmt auf diesem eine Fläche zwischen 10 mm² und 400 cm² ein. Dadurch, dass sich die erfindungsgemäß verwendete Metall-Luft-Zelle in sehr geringen Dicken herstellen lässt, ist es möglich, auch große Flächen mit der Batterie zu bedrucken ohne dass die Batterie aufträgt.

Anode: Die metallbasierte Anode einer Metall-Luft-Batterie lässt sich leicht drucken, so ist beispielsweise das Drucken von Anoden aus Zinkpasten bestehend aus Zinkpulver, einem geeigneten Binder und einem geeigneten Lösungs- und/oder Suspensionsmittel schon seit längerem bekannt, beispielsweise aus der WO 2006/105966.

Gleichermaßen lassen sich aber auch Metallfolien, insbesondere dünne Zink-Folien, als Anode verbauen. Gemäß der vorliegenden Erfindung ist es beispielsweise möglich, eine Zinkfolie als dünne Anodenschicht auf einem Substrat (z.B. einer Oberfläche der erfindungsgemäßen Grußkarte) anzuordnen, beispielsweise durch Verklebung auf dem Substrat zu fixieren, und anschließend die Folie mit einem Separator abzudecken, auf dem anschließend eine Luftkathode angeordnet wird. Gleichermaßen ist es möglich, eine dünne, flächige, zinkhaltige Anodenschicht durch Drucken auf dem Substrat anzuordnen.

Ableiter: Ableiter sind, abgesehen von den bereits erwähnten Verfahren, auch durch Druck herstellbar. So können die bereits erwähnten Leiterbahnen problemlos gedruckt werden, beispielsweise unter Verwendung einer Silberpartikel enthaltenden Paste. Das Drucken von Ableiterstrukturen ist bereits Stand der Technik und muss im Rahmen der vorliegenden Erfindung nicht näher erläutert werden.

So ist es beispielsweise möglich, vor dem erwähnten Aufbringen der Zinkfolie oder Zinkpaste auf ein Substrat auf dieses eine Ableiterstruktur aus elektrisch leitenden Partikeln aufzudrucken (oder eben anderweitig aufzubringen).

Separator: Wie bereits erwähnt, kommen als Separatoren für Metall-Luft-Zellen von erfindungsgemäßen Grußkarten flächige mikroporöse Folien, Vliese oder Netze in Frage, gegebenenfalls getränkt mit einem Elektrolyten. Solche Separatoren können einfach auf der Anodenschicht abgelegt werden. Alternativ kann die Anodenschicht aber auch mit einem Separator bedruckt werden.

Dass sich Separatoren auch durch Druck herstellen lassen, ist in der DE 10 2010 018 071 A1 beschrieben. Diese schlägt zum Drucken von Separatoren eine Separatordruckpaste vor, die ein Lösungsmittel, mindestens ein Leitsalz, das in dem Lösungsmittel gelöst ist, sowie Partikel und/oder Fasern, die in dem Lösungsmittel bei Raumtemperatur zumindest nahezu, vorzugsweise vollständig, unlöslich und dabei elektrisch nicht leitend sind, umfasst.

Die in der Separatordruckpaste enthaltenen Partikel und/oder Fasern können beim Druckprozess eine dreidimensionale Matrix ausbilden, die dem entstehenden Separator eine feste Struktur und eine ausreichend hohe mechanische Festigkeit verleiht, um Kontakte zwischen entgegengesetzt gepolten Elektroden zu unterbinden. Voraussetzung ist, wie bereits gesagt, dass die Partikel und/oder Fasern elektrisch nicht leitend sind. Weiterhin sollten sie gegenüber der Lösung aus dem mindestens einen Leitsalz und dem Lösungsmittel zumindest bei Raumtemperatur chemisch stabil sein, sich insbesondere darin nicht oder nur sehr wenig lösen. Bevorzugt sind die Partikel und/oder die Fasern in der Separatordruckpaste in einem Anteil zwischen 1 Gew.-% und 75 Gew.-%, insbesondere zwischen 10 Gew.-% und 50 Gew.-%, enthalten. Dabei ist es unerheblich, ob ausschließlich Partikel oder Fasern oder etwa eine Mischung aus Partikeln und Fasern zum Einsatz kommt.

Die Partikel und/oder die Fasern weisen bevorzugt einen mittleren Durchmesser bzw. im Falle der Fasern eine mittlere Länge zwischen 1 µm und 50 µm auf. Besonders bevorzugt ist die Separatordruckpaste dabei frei von Partikeln und/oder Fasern, die einen Durchmesser und/oder eine Länge von mehr als 120 µm aufweisen. Idealerweise liegt der maximale Durchmesser und/oder die maximale Länge der in der Separatordruckpaste enthaltenen Partikel und/oder Fasern bei 80 µm.

Die Partikel und/oder Fasern in der Separatordruckpaste können grundsätzlich aus den unterschiedlichsten Materialien bestehen, sofern die oben genannten Anforderungen (elektrisch nicht leitende Eigenschaften sowie Unlöslichkeit in bzw. chemische Beständigkeit gegenüber der Leitsalzlösung) eingehalten werden. Entsprechend können die Partikel und/oder Fasern sowohl aus einem organischen als auch aus einem anorganischen Feststoff bestehen. Es ist beispielsweise möglich, Fasern aus organischen Materialien mit anorganischen Partikeln zu mischen oder umgekehrt.

Besonders bevorzugt umfasst der anorganische Feststoff mindestens eine Komponente aus der Gruppe mit keramischen Feststoffen, in Wasser nahezu oder vollständig unlöslichen Salzen, Glas, Basalt oder Kohlenstoff. Der Begriff "keramische Feststoffe" soll dabei sämtliche Feststoffe umfassen, die zur Herstellung keramische Produkte dienen können, darunter silikatische Materialien wie Aluminiumsilikate, Gläser und Tonmineralien, oxidische Rohstoffe wie Titandioxid oder Aluminiumoxid sowie nicht-oxidische Materialien wie Siliziumcarbid oder Siliziumnitrid.

Der organische Feststoff weist bevorzugt mindestens eine Komponente aus der Gruppe mit synthetischen Kunststoffen, halbsynthetischen Kunststoffen und Naturstoffen auf.

Der Begriff "bei Raumtemperatur nahezu oder vollständig unlöslich" meint, dass bei Raumtemperatur in einem entsprechenden Lösungsmittel eine allenfalls geringe, vorzugsweise gar keine, Löslichkeit besteht. Die Löslichkeit erfindungsgemäß einsetzbarer Partikel und/oder Fasern, insbesondere der erwähnten in Wasser nahezu oder vollständig unlöslichen Salze, sollte idealerweise die Löslichkeit von Calciumcarbonat in Wasser bei Raumtemperatur (25 °C) nicht übersteigen. Bei Calciumcarbonat handelt es sich im Übrigen um ein besonders bevorzugtes Beispiel für einen anorganischen Feststoff, der als Komponente mit Abstandshalterfunktion insbesondere in Partikelform in einer Separatordruckpaste enthalten sein kann.

Der Begriff "Faser" soll vorliegend sehr breit ausgelegt werden. Es sollen darunter insbesondere längliche Gebilde verstanden werden, die im Verhältnis zu ihrer Länge sehr dünn sind. Gut einsetzbar sind beispielsweise Fasern aus synthetischen Polymeren wie zum Beispiel Polyamidfasern oder Polypropylenfasern. Alternativ können auch Fasern anorganischen oder organischen Ursprungs wie beispielsweise Glasfasern, Keramikfasern, Fasern aus Kohlenstoff oder Cellulosefasern zum Einsatz kommen.

Bei dem Lösungsmittel in der Separatordruckpaste handelt es sich bevorzugt um ein polares Lösungsmittel, beispielsweise um Wasser.

Bei dem Leitsalz in einer Separatordruckpaste handelt es sich bevorzugt um mindestens eine Verbindung, die bei Raumtemperatur in dem in der Druckpaste enthaltenen Lösungsmittel löslich ist bzw. die in diesem in Form von solvatisierten Ionen vorliegt. Es umfasst besonders bevorzugt mindestens eine Komponente aus der Gruppe mit Zinkchlorid, Kaliumhydroxid und Natriumhydroxid.

Neben Leitsalzen, einem Lösungsmittel und den beschriebenen Partikeln und/oder Fasern kann die Separatordruckpaste zusätzlich noch einen Binder und/oder ein oder mehrere Additive umfassen. Während der Binder insbesondere dazu dient, dem aus der Separatordruckpaste herstellbaren Separator eine bessere mechanische Stabilität, idealerweise eine bessere mechanische Belastbarkeit und Flexibilität zu verleihen, dienen die Additive insbesondere dazu, die Verarbeitungseigenschaften der Separatordruckpaste zu variieren. Entsprechend können als Additive grundsätzlich sämtliche für Druckpasten geeignete Additive zum Einsatz kommen, beispielsweise Rheologiehilfsmittel, mit denen die Viskosität der Separatordruckpaste angepasst werden kann. Bei dem Binder kann es sich beispielsweise um einen organischen Binder wie Carboxymethylcellulose handeln. Auch andere, gegebenenfalls auch anorganische Komponenten wie Siliziumdioxid, sind als Zusätze mit bindenden Eigenschaften geeignet.

Der Separator wird bevorzugt in einer Dicke zwischen 10 µm und 500 µm, insbesondere zwischen 10 µm und 100 µm, gedruckt. In diesem Bereich weist er ausreichend gute separierende Eigenschaften auf, um einen Kurzschluss zwischen entgegengesetzt gepolten Elektroden zu verhindern.

Kathode: Auf den Separator kann eine Ableiterstruktur aufgebracht werden und dann eine Luftkathode, gegebenenfalls aber auch direkt eine Luftkathode.

Die eingangs erwähnten kunststoffgebundenen Gasdiffusionselektroden können ohne weiteres in Form von dünnen Folien bereitgestellt werden, so dass als dünne Kathodenschicht beispielsweise eine dünne, poröse Folie aus PTFE mit eingelagerten Katalysatorpartikeln dienen kann. Alternativ kann die Luftkathode aber ebenfalls durch Druck hergestellt werden.

In der DE 10 2011 007 297A1, deren Inhalt im Folgenden teilweise wiedergegeben ist, soweit er für die vorliegenden Anmeldung relevant ist, ist beschrieben, kunststoffgebundene Gasdiffusionselektroden, die als Luftkathoden für Metall-Luft-Zellen dienen können, mittels eines Druckprozesses zu bilden, insbesondere in Form einer flächigen, dünnen Schicht. Funktionierende Luftkathoden lassen sich problemlos aus einer Paste (Kathodendruckpaste) umfassend ein Lösungs- und/oder ein Suspensionsmittel, Partikel aus einem elektrokatalytisch aktiven Material (die Katalysatorpartikel) und Partikel aus einem hydrophoben Kunststoff (aus denen die bereits erwähnte Kunststoffmatrix gebildet wird) drucken.

Bei dem Lösungsmittel und/oder dem Suspensionsmittel handelt es sich bevorzugt um ein polares Lösungsmittel, insbesondere um Wasser. Gegebenenfalls können auch Wasser-Alkohol-Gemische zum Einsatz kommen.

Bei den Partikeln aus dem elektrokatalytisch aktiven Material handelt es sich bevorzugt um die eingangs bereits erwähnten Katalysatormaterialien, also insbesondere um Partikel aus einem Edelmetall wie Palladium, Platin, Silber oder Gold und/oder ein Manganoxid. Betreffend einsetzbare Manganoxide wird insbesondere auf die bereits erwähnte DE 37 22 019 A1 verwiesen.

Bei den Partikeln aus dem hydrophoben Kunststoff handelt es sich insbesondere um Partikel aus einem Fluorpolymer. Als Fluorpolymer besonders geeignet ist das ebenfalls bereits erwähnte PTFE. Dieses ist aufgrund seiner chemischen Beständigkeit und seines hydrophoben Charakters besonders geeignet.

Die Partikel in der Paste zur Herstellung der Luftkathode weisen insbesondere einen mittleren Durchmesser zwischen 1 µm und 50 µm auf. Bevorzugt enthalten die Pasten keine Partikel mit einem Durchmesser und/oder einer Länge > 120 µm, besonders bevorzugt > 80 µm.

Wie die beschriebene Separatordruckpaste weist auch die Paste zur Herstellung der Luftkathode in bevorzugten Ausführungsformen ein oder mehrere Additive umfassen, insbesondere zur Einstellung der Verarbeitungseigenschaften der Paste. Weiterhin enthält die Paste in der Regel mindestens ein leitfähigkeitsverbesserndes Additiv, insbesondere ein partikelförmiges leitfähigkeitsverbesserndes Additiv. Dieses kann insbesondere aus der Gruppe mit Kohlenstoff-Nanotubes (CNTs), Ruß und Metallpartikeln (zum Beispiel aus Nickel) ausgewählt werden.

Die Kathodendruckpaste weist bevorzugt einen Anteil an dem Lösungsmittel und/oder an dem Suspensionsmittel zwischen 20 Gew.-% und 50 Gew.-% auf. In anderen Worten, der Feststoffgehalt der Paste liegt bevorzugt im Bereich zwischen 50 Gew.-% und 80 Gew.-%.

Besonders bevorzugt weist die Kathodendruckpaste die folgenden Komponenten in den folgenden Anteilen auf:
a) zwischen 20 Gew.-% und 50 Gew.-% des Lösungsmittels und/oder des Suspensionsmittels,
b) zwischen 0 Gew.-% und 20 Gew.-% der Partikel aus dem elektrokatalytisch aktiven Material,
c) zwischen 0,5 Gew.-% und 5 Gew.-% der Binderpartikel aus dem hydrophoben Kunststoff und
d) zwischen 30 Gew.-% und 80 Gew.-% des mindestens einen leitfähigkeitsverbessernden Additivs.

Die prozentualen Anteile der genannten Bestandteile summieren sich bevorzugt auf 100 Gew.-% auf.

Wenn im Rahmen der vorliegenden Anmeldung von Druck gesprochen wird, so ist damit bevorzugt ein Siebdruckprozess gemeint. Beim Siebdruck handelt es sich bekanntlich um ein Druckverfahren, bei dem Druckpasten mittels eines Rakels durch ein feinmaschiges Gewebe hindurch auf das zu bedruckende Material gepresst werden. An den Stellen des Gewebes, an denen dem Druckbild entsprechend keine Paste aufgedruckt werden soll, werden die Maschenöffnungen des Gewebes durch eine Schablone undurchlässig gemacht. An den übrigen Stellen soll die Druckpaste dagegen die Maschenöffnungen problemlos durchdringen können. Damit es nicht zu einem Verstopfen der Maschenöffnungen kommen kann, sollten die in der Druckpaste enthaltenen festen Bestandteile eine gewisse Maximalgröße, die unter der Maschenöffnungsweite liegen sollte, nicht überschreiten.

Weitere Merkmale der Erfindung ergeben sich aus der nachfolgenden Beschreibung bevorzugter Ausführungsformen. Es sei an dieser Stelle explizit betont, dass sämtliche in der vorliegenden Anmeldung beschriebenen fakultativen Aspekte der erfindungsgemäßen Grußkarte jeweils für sich allein oder in Kombination mit einem oder mehreren der weiteren beschriebenen fakultativen Aspekte bei einer Ausführungsform der Erfindung verwirklicht sein können. Die nachfolgende Beschreibung von bevorzugten Ausführungsformen dient lediglich zur Erläuterung und zum besseren Verständnis der Erfindung und ist in keiner Weise einschränkend zu verstehen.

### Ausführungsbeispiel

Im Folgenden werden die Herstellung und der Aufbau einer elektronischen Grußkarte gemäß der vorliegenden Erfindung beschrieben. Die Grußkarte weist als Energiequelle eine Zink-Luft-Batterie auf sowie eine Audiovorrichtung mit flachem Aufbau, die, wenn sie mit Strom versorgt wird, eine gespeicherte Melodie abspielt.

Auf einem ersten Papierbogen wird mittels Siebdruck eine Ableiterschicht erzeugt. Dazu wird eine Kupferpartikel enthaltende Paste verarbeitet. Anschließend werden eine 100 µm dicke Zinkfolie als metallbasierte Anode sowie eine elektronische Audiovorrichtung auf dem Papierbogen derart angeordnet, dass über die Ableiterschicht eine elektrische Verbindung zwischen der Zinkfolie und dem entsprechenden elektrischen Anschluss der Audiovorrichtung gewährleistet ist.

Im nächsten Schritt wird die Zinkfolie mit einem Separator überdruckt. Dazu werden 77,8 Gewichtsteile einer 50%igen Zinkchloridlösung mit 3,4 Gewichtsteilen amorphem Siliziumdioxid und 18,8 Gewichtsteilen eines Calciumcarbonatpulvers vermischt. Das gelöste Zinkchlorid soll die erforderliche lonenleitfähigkeit des Elektrolyten in der herzustellenden Batterie gewährleisten. Das verwendete Calciumcarbonatpulver besteht zu ca. 50 % aus einem Pulver mit einer mittleren Korngröße < 11 µm und zu ca. weiteren 50 % aus einem Pulver mit einer mittleren Korngröße < 23 µm. Es weist also eine bimodale Verteilung auf. Das Siliziumdioxid dient insbesondere zur Einstellung der Viskosität der verwendeten Separatordruckpaste.

Die Elektrolyt- bzw. Separatorschicht auf der Zinkfolie weist nach Trocknung eine durchschnittliche Dicke von ca. 50 µm auf.

Alternativ kann die Zinkfolie statt mit dem gedruckten Separator auch mit einem Folienseparator, beispielsweise einem Separator aus einer 50 µm dicken mikroporösen Polypropylenfolie, abgedeckt werden.

Auf die Separatorschicht wird anschließend als Luftkathode eine Folie mit einer porösen Matrix aus PTFE und darin eingelagerten Partikeln aus einem Manganoxid (hergestellt aus einer der in der DE 37 22 019 A1 beschriebenen Kunststoff-Manganoxid-Mischungen) aufgepresst. Derartige Folien können großflächig mit einer Dicke zwischen 20 µm und 200 µm gefertigt werden. Die Folie überlappt großflächig mit der darunter liegenden Separatorschicht.

Anschließend werden die Luftkathode sowie die darunter liegenden Schichten mit einem zweiten Papierbogen abgedeckt, der wie der erste Papierbogen einseitig mit einem aufgedruckten Ableiter versehen wird. Im Gegensatz zum ersten Ableiter wird der auf dem zweiten Bogen allerdings nicht als durchgängige, geschlossenen Schicht gedruckt sondern netz- oder gitterartig. Der zweite Papierbogen wird derart auf der Luftkathode abgelegt, dass die Ableiterstruktur großflächig mit der Luftkathode überlappt und gleichzeitig eine elektrische Verbindung zwischen der Luftkathode und dem entsprechenden elektrischen Anschluss der Audiovorrichtung gewährleistet ist.

Der erste und der zweite Papierbogen unterscheiden sich in einem wesentlichen Aspekt. Während der erste Papierbogen im Wesentlichen luftundurchlässig gewählt wird, wird als zweiter Papierbogen Papier mit poröser Beschaffenheit gewählt, das von Luftsauerstoff leicht durchdrungen werden kann.

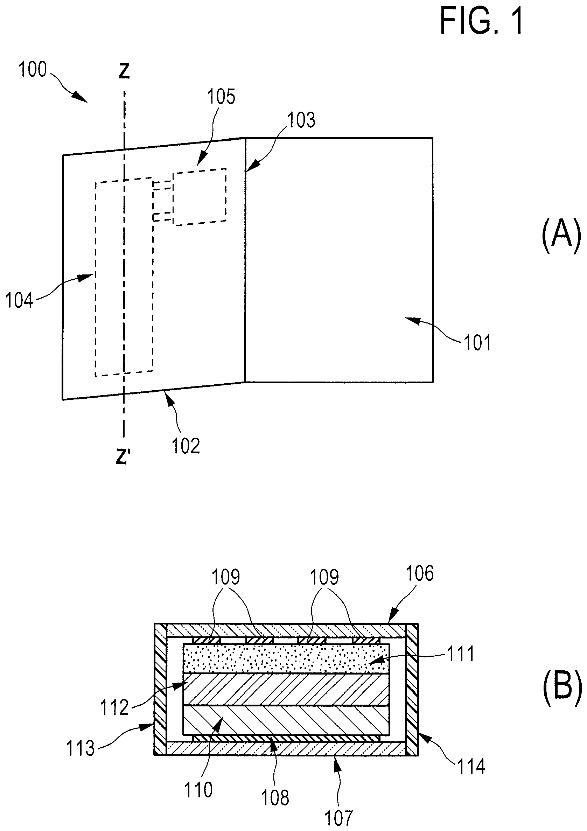

Der so hergestellte Verbund aus dem ersten und dem zweiten Papierbogen sowie dem dazwischen angeordneten Stapel aus Separator-, Elektroden- und Ableiterschichten sowie der elektronischen Audiovorrichtung wurde anschließend zu einer aufklappbaren elektronischen Grußkarte weiterverarbeitet. Diese ist in **Fig.** 1 dargestellt.

In der in der Draufsicht (Fig. 1A), mit hochgeklapptem Vorderteil dargestellten elektronischen Grußkarte **100** bildet der gemäß obiger Anleitung hergestellte Verbund das Vorderteil 102 aus, wobei der zweite Papierbogen die sichtbare Front- und damit einen Teil der Innenseite der Grußkarte bildet. Die im doppelwandigen Vorderteil **102** angeordnete Zink-Luft-Batterie **104** ist über Ableiter an die elektronische Audiovorrichtung **105** gekoppelt.

In **Fig. 1B** ist eine Schnittdarstellung (schematisch) des Vorderteils **102** entlang der Linie Z-Z' dargestellt. Auf den ersten Papierbogen **107** ist als durchgängige Schicht der Ableiter **108** aufgebracht. Auf diesem ist die Zinkfolie **110** abgelegt, die wiederum von dem Separator **112** bedeckt wird. Dieser steht in unmittelbarem Kontakt mit der Luftkathode **111,** die wiederum von dem zweiten Papierbogen **106** mit dem darauf aufgebrachten netz- oder gitterförmigen Ableiter **109** beschichtet ist. Endständig sind die beiden Papierbögen **106** und **107** über die Verklebungen **113** und **114** miteinander verbunden.

Das Rückteil **101** kann durch Umklappen entlang der Knicklinie **103** auf der Frontseite abgelegt werden und somit den luftdurchlässigen zweiten Papierbogen vollständig abdecken. Gefertigt ist das Rückteil **101** bevorzugt aus dem gleichen luftundurchlässigen Material wie der erste Papierbogen. Das Rückteil **101** kann damit beim Zuklappen der Grußkarte **100** die Zufuhr von Luft zu den in dem zweiten Papierbogen befindlichen Poren blockieren oder umgekehrt beim Aufklappen der Grußkarte **100** freigeben. Die Poren in dem zweiten Papierbogen fungieren somit im Sinne der vorliegenden Anmeldung als mindestens eine Eintrittsöffnung für Luftsauerstoff, die umklappbare Rückseite **101** dagegen als Mittel zum Öffnen und Verschließen der mindestens einen Eintrittsöffnung nach Art einer Klappe.

## Patentansprüche

1. Elektronische Grußkarte umfassend eine Audioausgabevorrichtung sowie eine Metall-Luft-Zelle als Energiequelle für die Audioausgabevorrichtung, wobei die Metall-Luft-Zelle
• eine Luftkathode, eine metallbasierte Anode, einen Separator
• ein Gehäuse, das die Luftkathode, die metallbasierte Anode und den Separator umschließt und das mindestens eine Eintrittsöffnung für Luftsauerstoff aufweist, sowie
• ein Mittel zum Öffnen und Verschließen der mindestens einen Eintrittsöffnung für Luftsauerstoff
umfasst und wobei es sich bei dem Mittel zum Öffnen und Verschließen der mindestens einen Eintrittsöffnung um eine Klappe, ein Ventil oder einen Schieber handelt und wobei die Luftkathode, die metallbasierte Anode und der Separator jeweils als dünne Schicht ausgebildet sind (die Kathoden-, die Anoden- und die Separatorschicht) und die Schichten einen Stapel ausbilden, in dem die Separatorschicht zwischen der Anoden- und der Kathodenschicht angeordnet ist, und wobei der Stapel aus den Schichten, gegebenenfalls inklusive den elektrischen Ableitern, eine maximale Dicke zwischen 200 µm und 1000 µm aufweist und wobei mindestens eines der Mitglieder aus der Gruppe mit Luftkathode, Anode und Separator durch ein Druckverfahren gebildet ist.

2. Elektronische Grußkarte nach Anspruch 1, **dadurch gekennzeichnet, dass** der Stapel auf einem flächigen Substrat gebildet wurde und auf diesem eine Fläche zwischen 10 mm² und 400 cm² einnimmt.

## Claims

1. Electronic greeting card, comprising an audio output device and a metal-air cell as an energy source for the audio output device, wherein the metal-air cell comprises
• an air cathode, a metal-based anode, a separator,
• a housing, which encloses the air cathode, the metal-based anode and the separator and which has at least one inlet opening for atmospheric oxygen, as well as
• a means for opening and closing the at least one inlet opening for atmospheric oxygen
and wherein the means for opening and closing the at least one inlet opening is a flap, a valve or a slide valve and wherein the air cathode, the metal-based anode and the separator are respectively formed as a thin layer (the cathode layer, the anode layer and the separator layer) and the layers form a stack in which the separator layer is arranged between the anode layer and the cathode layer, and wherein the stack comprising the layers, possibly including the electrical discharge conductors, has a maximum thickness of between 200 µm and 1000 µm and wherein at least one of the members of the group comprising the air cathode, the anode and the separator is formed by a printing process.

2. Electronic greeting card according to Claim 1, **characterized in that** the stack is formed on a sheet-like substrate and on the latter takes up a surface area of between 10 mm² and 400 cm².

## Revendications

1. Carte de voeux électronique, comprenant un dispositif à sortie audio ainsi qu'une cellule métal-air en tant que source d'énergie pour le dispositif à sortie audio, la cellule métal-air comprenant
- une cathode à air, une anode à base de métal, un séparateur,
- un boîtier qui entoure la cathode à air, l'anode à base de métal et les séparateurs, et qui présente au moins une ouverture d'entrée pour l'oxygène de l'air, et
- un moyen pour ouvrir et fermer l'au moins une ouverture d'entrée pour l'oxygène de l'air,
et le moyen pour ouvrir et fermer l'au moins une ouverture d'entrée étant un clapet, une soupape ou un tiroir et la cathode à air, l'anode à base de métal et le séparateur étant à chaque fois réalisés sous forme de couche mince (les couches de cathode, d'anode et de séparateur) et les couches constituant une pile, la couche de séparateur étant disposée entre la couche d'anode et la couche de cathode, et la pile constituée des couches, éventuellement en incluant les conducteurs électriques, présentant une épaisseur maximale comprise entre 200 µm et 1000 µm et au moins l'un des membres du groupe comprenant la cathode à air, l'anode et le séparateur étant formé par un procédé d'impression.

2. Carte de voeux électronique selon la revendication 1, **caractérisée en ce que** la pile a été formée sur un substrat plat et occupe sur celui-ci une surface comprise entre 10 mm² et 400 cm².
